**Europäisches Patentamt**

**European Patent Office**

**Office européen des brevets**

(19)

(11) Publication number: **0 363 333**
**A2**

## EUROPEAN PATENT APPLICATION

(21) Application number: **89830417.5**

(22) Date of filing: **26.09.89**

(51) Int. Cl.5: **C09D 5/14**

(30) Priority: **05.10.88 IT 361388**

(43) Date of publication of application:
**11.04.90 Bulletin 90/15**

(84) Designated Contracting States:
**CH DE ES FR GB GR LI SE**

(71) Applicant: **CASTELLINI S.p.A.**
**Via Saliceto, 22**
**I-40013 Castelmaggiore (Bologna)(IT)**

(72) Inventor: **Castellini, Franco**
**Via Bellinzona, 60**
**I-40135 Bologna(IT)**

(74) Representative: **Lanzoni, Luciano**
**c/o BUGNION S.p.A. Via Farini, 37**
**I-40124 Bologna(IT)**

(54) **An antibacterial paint finish for the surfaces of dental surgery equipment.**

(57) A hygiene-conducive finish for application to the external surfaces of dental surgery equipment is produced by selecting a proprietary synthetic paint (e.g. acrylic) and admixing an antibacterial agent to obtain a single phase; applying the solubilized mixture to the exposed surfaces of a typical dental surgery apparatus pedestal, a bacteria-inhibiting film is formed that totally prevents the survival and proliferation of micro-organisms scattered and deposited on such surfaces, as well as ensuring that the film itself suffers no microbiological deterioration.

EP 0 363 333 A2

## An antibacterial paint finish for the surfaces of dental surgery equipment

The present invention relates to an antibacterial paint product for application to the surfaces of dental surgery equipment.

Within the general concept of ensuring hygiene in the dental surgery, one aspect which merits special attention is the protection afforded to external surfaces of the various items of equipment, and in particular, of the apparatus pedestal; more than any others, in fact, the surfaces of the apparatus pedestal are exposed to bacterial contamination during regular practice, and can provide an ideal environment for the survival and growth of germs. In the case of painted surfaces, the contamination risk is increased by the very structure of the paint film, which, coming under attack from surface micro-organisms, undergoes a gradual deterioration characterized by porosity and extensive hairline cracking; a thorough and efficient disinfection is thus made practically impossible, and the degraded surface itself becomes a veritable breeding ground for micro-organisms, to its further detriment.

The object of the invention is to create a paint finish for application to the surfaces of dental surgery equipment, and of apparatus pedestals in particular, of which the hardened film is certain to resist microbiological aggression, and thus to guarantee a high standard of hygiene.

The stated object and other objects besides are realized with a product according to the invention, which is characterized in that it consists in the combination of a paint and a bacteria-inhibiting agent, mixed together and solubilized in such a way as to obtain a single phase.

In effect, the invention consists in selecting a standard paint formulated from synthetic resins (e.g. acrylic), and admixing an antibacterial product in such a way that the product dilutes in the paint to form a single phase; accordingly, the paint finish ultimately applied to the exterior of apparatus ensures a permanent bacteria-inhibiting effect by which micro-organisms scattered and deposited on the surfaces are prevented from multiplying, and any possibility of microbiological deterioration in the film precluded.

In the particular finish tried and tested, the antibacterial agent was an organometallic phenol derivative, the properties of which include high resistance to the temperatures at which the applied finish is baked (150...180 °C), good activity at particularly low concentrations, hence non-toxicity at the concentrations effectively required, and needless to say, chromatic stability in respect of the paints in which it is dissolved. Such a product is admixed at a rate of between 0.02 and 0.04% by weight to the proprietary paint, preferably 0.03%, 'proprietary' implying the resin medium with the pigment, and catalyst if any, already added.

The ultimate antibacterial formulation obtained possesses the following properties:
-resistance to lixivious action;
-non-volatility at normal temperatures;
-long-term effectiveness (in practice, the entire service life of the item of equipment).

The novelty of the invention resides precisely in the fact of combining the products aforementioned to obtain a perfect synergy between the power of the film to deter bacteria, and its natural ability to withstand chemical attack and natural wear and remain unaffected by the action of disinfectants specifically formulated for external surfaces.

## Claims

1) An antibacterial paint finish for application to the surfaces of dental surgery equipment, characterized in that it consists in a paint and an antibacterial agent, mixed together and solubilized in such a way as to obtain a single phase.

2) A finish as in claim 1, consisting in a synthetic paint formulated from acrylic resins, and an antibacterial agent, mixed together and solubilized in such a way as to obtain a single phase.

3) A finish as in claim 1, consisting in a synthetic paint formulated from epoxy resins, and an antibacterial agent, mixed together and solubilized in such a way as to obtain a single phase.

4) A finish as in claim 1, consisting in a synthetic paint formulated from polyurethane resins, and an antibacterial agent, mixed together and solubilized in such a way as to obtain a single phase.

5) A finish as in claim 1, consisting in a synthetic paint formulated from phenolic resins, and an antibacterial agent, mixed together and solubilized in such a way as to obtain a single phase.

6) A finish as in claim 1, consisting in a synthetic paint formulated from melamine resins, and an antibacterial agent, mixed together and solubilized in such a way as to obtain a single phase.

7) A paint finish as in preceding claims, wherein the antibacterial agent is an organometallic phenol derivative affording high resistance to post-application paint baking temperatures and good activity at particularly low concentrations, hence non-toxicity at the concentrations effectively utilized, and remaining chromatically stable in respect of the paint in which it is dissolved.

8) A finish as in claim 7, wherein the antibacterial agent is admixed at a rate of between 0.02 and 0.04% by weight to a paint ready for application.

9) A finish as in claim 7, wherein the antibacterial agent is admixed at a rate of 0.03% by weight to a paint ready for application.